# EUROPÄISCHE PATENTSCHRIFT

(11) **EP 2 134 521 B1**
(45) Veröffentlichungstag und Bekanntmachung des Hinweises auf die Patenterteilung: **12.01.2011**
(21) Anmeldenummer: 08716261.6
(22) Anmeldetag: 05.03.2008
(51) Int. Cl.: B29B 9/06

(54) **VORRICHTUNG ZUR ERZEUGUNG VON GRANULATKÖRNERN AUS EINER KUNSTSTOFFSCHMELZE**
DEVICE FOR THE PRODUCTION OF GRANULATE GRAINS FROM A PLASTIC MELT
DISPOSITIF POUR PRODUIRE DES GRANULÉS À PARTIR D'UN PLASTIQUE EN FUSION

(30) Priorität: 08.03.2007 DE 202007003495 U
(43) Veröffentlichungstag der Anmeldung: 23.12.2009
(73) Patentinhaber: Automatik Plastics Machinery GmbH, 63762 Grossostheim (DE)
(72) Erfinder: SCHOLL, Hans-Jürgen, 63743 Aschaffenburg (DE); SOMMER, Joachim, 63500 Selingenstadt (DE)
(74) Vertreter: Bardehle, Heinz
(86) Internationale Anmeldenummer: PCT/EP2008/001744
(87) Internationale Veröffentlichungsnummer: WO 2008/107173

(56) Entgegenhaltungen:
- US-A- 3 599 285
- US-A- 4 167 386
- US-A- 4 720 251

## Beschreibung

Die Erfindung betrifft eine Vorrichtung zur Erzeugung von Granulatkörnern aus einer Kunststoffschmelze, mit einer Düsenplatte mit zumindest einer Düsenöffnung, aus welcher ein Strang der Kunststoffschmelze in eine Prozesskammer austritt, und einem Schneidwerkzeug mit zumindest einer Schneidleiste, welches mit einer Vorschubvorrichtung gegen die Düsenplatte fahrbar ist, wobei der aus der Düsenöffnung der Düsenplatte austretende Kunststoffstang durch die relativ zur Düsenöffnung bewegte Schneidleiste in Granulatkörner zerteilbar ist.

Bei solchen Vorrichtungen besteht generell das Problem, dass sich im Laufe des Betriebs die Schneidleiste und die Düsenplatte stark abnutzen, wodurch die Kunststoffstränge nicht mehr zufriedenstellend bzw. gar nicht mehr in Granulatkörner zerteilt werden können. Ferner ist insbesondere die Düsenplatte in der Herstellung verhältnismäßig komplex und teuer, so dass zumindest diese möglichst lange Standzeiten aufweisen sollte. Herkömmliche Düsenplatten, z.B. mit Hartmetallbeschichtungen, können lediglich Standzeiten um die 10000 Stunden erreichen, wobei entsprechenden damit verwendete Schneidleisten ohne Hartmetallbeschichtung teilweise sogar nur Standzeiten von 500-1000 Stunden erreichen.

Das US-Patent Nr. US 4 167 386 offenbart eine Vorrichtung gemäß dem Oberbegriff des Anspruchs 1.

Das Deutsche Gebrauchsmuster DE 20 2005 001 809 U1 beschreibt Lochplatte für einen Unterwassergranulator, welche allgemein eine nicht näher beschriebene Verschleißschutz- und Wärmeisolationsschicht an der Stirnseite davon aufweisen kann.

Das US-Patent Nr. US 5 403 176 beschreibt eine Düsenplattenanordnung, welche eine ebenfalls dort nicht näher beschriebene Abnutzungsfläche in Form eines Abnutzungsrings oder dergleichen aufweisen kann.

Es ist daher die Aufgabe der vorliegenden Erfindung, eine Vorrichtung zur Erzeugung von Granulatkörnern aus einer Kunststoffschmelze vorzusehen, welche die Nachteile des Standes der Technik überwindet und insbesondere verhältnismäßig kostengünstig ist, eine lange Standzeit der Komponenten aufweist und auch nach längerem Betrieb oder gegen Ende der Standzeit der Komponenten noch eine zuverlässige Bildung von Granulatkörnern ermöglicht.

Diese Aufgabe wird erfindungsgemäß gelöst durch eine Vorrichtung zur Erzeugung von Granulatkörnern mit den Merkmalen gemäß dem Anspruch 1. Bevorzugte Ausführungsformen sind in den Unteransprüchen definiert.

Die erfindungsgemäße Vorrichtung zur Erzeugung von Granulatkörnern aus einer Kunststoffschmelze weist auf eine Düsenplatte mit zumindest einer Düsenöffnung, aus welcher ein Strang der Kunststoffschmelze in eine Prozesskammer austritt, und ein Schneidwerkzeug mit zumindest einer Schneidleiste, welches mit einer Vorschubvorrichtung gegen die Düsenplatte fahrbar ist, wobei der aus der Düsenöffnung der Düsenplatte austretende Kunststoffstang durch die relativ zur Düsenöffnung bewegte Schneidleiste in Granulatkörner zerteilbar ist. Erfindungsgemäß weist die Düsenplatte zumindest auf der zum Schneidwerkzeug hin zeigenden Oberfläche eine Diamantbeschichtung auf, wobei die Härte der Diamantbeschichtung, d.h. des Materials der Diamantbeschichtung, größer ist als die Härte der Schneidleiste, d.h. des Materials der Schneidleiste, und wobei die durchschnittliche Rauhigkeit der Diamantbeschichtung, d.h. des Materials der Diamantbeschichtung, um mindestens den Faktor zwei größer ist als die durchschnittliche Rauhigkeit der Schneidleiste, d.h. des Materials der Schneidleiste.

Durch die erfindungsgemäße Gestaltung der Vorrichtung mit der Düsenplatte mit einer Diamantbeschichtung, deren Härte größer ist als die Härte der Schneidleiste, wird erreicht, dass die Standzeit einer solchen Düsenplatte deutlich gegenüber herkömmlichen Düsenplatten mit normalen Hartmetallbeschichtungen verlängert werden kann. Die erfindungsgemäß weniger harten Schneidleisten sind als "Verschleißteile" nicht so teuer und auch gegebenenfalls leicht austauschbar. Ferner wird die Granulationsleistung der erfindungsgemäßen Vorrichtung noch dadurch verbessert, dass aufgrund der durchschnittlichen Rauhigkeit der Diamantbeschichtung, d.h. des Materials der Diamantbeschichtung, welche um mindestens den Faktor zwei größer ist als die durchschnittliche Rauhigkeit der Schneidleiste, d.h. des Materials der Schneidleiste, ein gewisser Nachschleifeffekt für die Schneidleiste erfindungsgemäß auftritt, welcher dafür sorgt, dass auch nach längerem Betrieb oder gegen Ende der Standzeit noch eine zuverlässige Bildung von Granulatkömem möglich ist. Durch die erfindungsgemäße Gestaltung kann das gesamte Niveau der Härten der Verwendeten Komponenten erhöht werden, so dass erfindungsgemäß die Standzeiten jeweils deutlich erhöht sein können.

Bevorzugt kann die durchschnittliche Rauhigkeit der Diamantbeschichtung sogar um mindestens den Faktor fünf, bevorzugt den Faktor zehn, größer als die durchschnittliche Rauhigkeit der Schneidleiste sein, wodurch der Nachschleifeffekt noch verbessert werden kann.

Die durchschnittliche Rauhigkeit der Diamantbeschichtung kann dabei größer gleich 0,50 µm sein.

Die Diamantbeschichtung kann eine Dicke im Bereich von 50 µm bis 100 µm aufweisen.

Die Diamantbeschichtung kann auf einer auswechselbaren Einlage oder Auflage in oder auf der Düsenplatte angeordnet bzw. ausgeführt sein, wodurch sich jeweils eine besondere Servicefreundlichkeit ergibt.

Die Schneidleiste selbst kann aus einer Hartmetalllegierung bestehen. Dadurch kann erfindungsgemäß die Standzeit der Schneidleiste nochmals deutlich erhöht sein.

Die Erfindung wird im Folgenden anhand der Figuren beispielhaft noch näher erläutert werden. Es zeigen:
- Figur 1: eine schematische Schnittansicht einer Vorrichtung zur Erzeugung von Granulatkörnern aus einer Kunststoffschmelze gemäß einer Aus- führungsform der Erfindung;
- Figur 2: eine schematische Schnittansicht einer Düsenplatte mit einer auf einer auswechselbaren Einlage angeordneten Diamantbeschichtung gemäß einer bevorzugten Ausführungsform der vorliegenden Erfindung;
- Figur 3: eine schematische Schnittansicht einer Düsenplatte mit einer auf einer auswechselbaren Auflage angeordneten Diamantbeschichtung gemäß einer weiteren bevorzugten Ausführungsform der vorliegenden Erfin- dung; und
- Figur 4: eine schematische Draufsicht auf eine Düsenplatte mit einer Diamant- beschichtung gemäß einer bevorzugten Ausführungsform der vorlie- genden Erfindung.

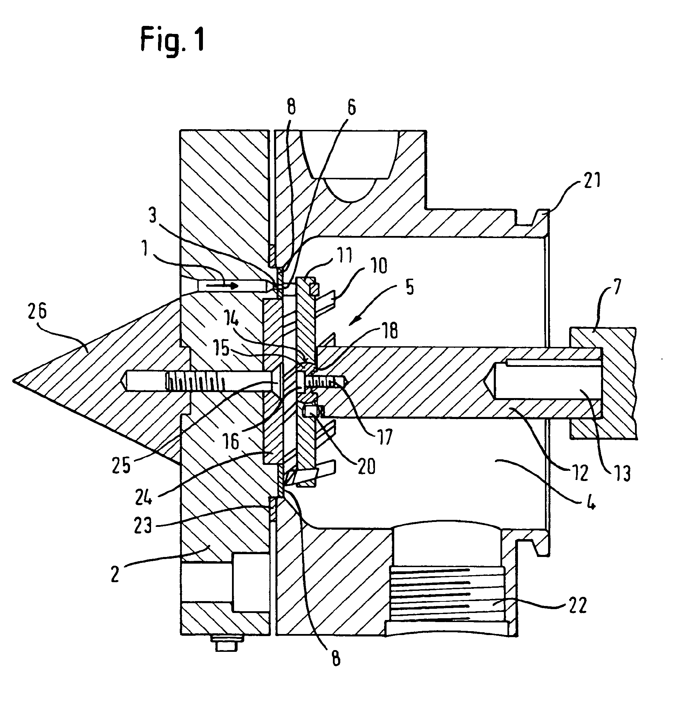

Die in der Figur 1 schematisch und nicht zwingend maßstabsgerecht dargestellte Vorrichtung zur Erzeugung von Granulatkörnern aus einer Kunststoffschmelze 1 (angedeutet durch den Pfeil in Figur 1) weist eine Düsenplatte 2 auf, der in bekannter Weise ein Kegel 26 vorgeordnet ist, der zu den nicht dargestellten Leitungsteilen für die in flüssiger Form zugeführte Kunststoffschmelze gehört. Der Kegel 26 ist beispielsweise mittels einer Schraube an der Düsenplatte 2 angeschraubt, die mit ihrem Kopf 25 die Platte 24 an die Düsenplatte 2 andrückt. Die Düsenplatte 2 wird von den Schmelzeleitungen durchsetzt, die in Düsen bzw. Düsenöffnungen 3 enden. Die Düsenöffnungen 3 sind in mehrfacher ringförmiger Anordnung in die Düsenplatte 2 eingelassen und dienen in bekannter Weise dazu, zu granulierenden Kunststoff aus ihren Öffnungen austreten zu lassen.

Zumindest im Bereich der Düsen bzw. Düsenöffnungen 3 ist erfindungsgemäß eine Diamantbeschichtung 8 mit Öffnungen, welche mit den Düsenöffnungen 3 zusammenfallen bzw. mit diesen ausgerichtet sind, vorgesehen, über welche Messer 10 eines Schneidwerkzeugs 5 mit ihrer Schneidleiste 6 hinweg streichen, wobei die Messer 10 von einem Messerrotor 11 gehalten werden, so dass bei Rotation des Messerrotors 11 die Messer 10 aus den Düsen austretenden Kunststoff zu Granulat zerschneiden. Dabei bleiben die Messer 10 in Berührungskontakt mit der Düsenplatte 2 bzw. mit der Diamantbeschichtung 8 der Düsenplatte 2 und gleiten über diese und die Düsen 3 hinweg, was einen glatten Schnitt des aus den Düsen 3 austretenden Kunststoffs gewährleistet.

Der Messerrotor 11 ist über die diesem zugewandte Stirnseite einer Antriebswelle 12 an dieser befestigt. Die Antriebswelle 12 ist mit einem hier nicht dargestellten Antriebsmotor verbunden, wozu die Antriebswelle 12 des Messerrotors 11 in bekannter Weise mit der motorseitigen Welle 13 verbunden ist. Eine Vorschubvorrichtung 7 dient dazu, das Schneidwerkzeug 5 gegen die Düsenplatte 2 zu fahren.

Die Verbindung zwischen der Antriebswelle 12 und dem Messerrotor 11 ist folgendermaßen gestaltet, wobei eine ähnliche Gestaltung beispielsweise in der Deutschen Offenlegungsschrift DE 103 44 793 A1 gezeigt ist: Der Messerrotor 11 besitzt eine zentrale Ausnehmung 14, deren Innenfläche mit der Oberfläche einer Kugel übereinstimmt. In diese Ausnehmung 14 ist ein Kugelabschnitt 15 so eingepasst, dass sich der Messerrotor 11 um den Kugelabschnitt 15 nach Art einer allseitigen Kippbewegung verstellen lässt. Der Kugelabschnitt 15 besitzt eine Aufnahme für einen Kopf 16 einer Schraube 17, die in die Stirnseite der Antriebswelle eingedreht ist und damit den Kugelabschnitt 15 an die Stirnseite der Antriebswelle 12 anzieht und an dieser befestigt. Der Kugelabschnitt 15 weist für seine zentrierte Festlegung an der Antriebswelle 12 einen ringförmigen Vorsprung 18 auf, der auf einen entsprechenden Vorsprung an der Stirnseite der Antriebswelle 12 passt. Aufgrund dieser Befestigung des Kugelabschnitts 15 und der Aufnahme des Messerrotors 11 über die kugelförmige Gestalt der Außenfläche des Kugelabschnitts 15 und der Innenfläche 14 des Messerrotors 11 lässt sich dieser gegenüber der Antriebswelle 12 so kippen, dass der Messerrotor 11 aus seiner in der Figur 1 dargestellten rechtwinkligen Lage zur Antriebswelle 12 in eine demgegenüber um einen geringen Winkel gekippte Lage verschieben lässt.

Bei Rotation der Antriebswelle 12 wird der Messerrotor 11 mitgenommen, wobei die Messer 10 über die Oberfläche der Düsenplatte 2 bzw. über die Diamantbeschichtung 8 der Düsenplatte 2 gleiten. Wenn es nun aufgrund z.B. von temperaturbedingten Verschiebungen zu einer Verlagerung der genauen Lage der Antriebswelle 12 zur Düsenplatte 2 kommt, beispielsweise auch durch eine Abnutzung der Messer 10 oder der betreffenden Oberfläche der Düsenplatte 2, so wird durch die Vorschubvorrichtung 7 dafür gesorgt, dass einerseits aufgrund eines axialen Drucks gegen den Messerrotor 11 die Messer 10 in Kontakt mit der Oberfläche der Düsenplatte 2 bzw. der Diamantbeschichtung 8 der Düsenplatte 2 bleiben und dabei eine geringe Verkippung der Antriebswelle 12 gegenüber der Düsenplatte 2 dadurch ausgleichen, dass sich der Messerrotor 11 auf dem Kugelabschnitt 15 derart verschieben kann, dass er sich an die durch die Oberfläche der Düsenplatte 2 gegebene Richtung anpasst, ohne dass dabei der Messerrotor aus seiner zentrischen Lage zur Antriebswelle 12 heraus gleiten kann. Hierdurch wird gewährleistet, dass bei Aufrechterhaltung des Drehmoments der Messerrotor 11 stets in zentraler Lage zur Antriebswelle 12 und mit seinen Messern 10 in Kontakt mit der Oberfläche der Düsenplatte 2 gehalten werden kann.

Der Bereich der Düsenplatte 2 mit der Diamantbeschichtung 8 und mit den Düsen 3 und der Messerrotor 11 mit seinen Messern 10 ist in dem Innenraum einer Prozesskammer 4 untergebracht, in dem Kühlwasser über den Zulauf 22 und einen nicht dargestellten Ablauf strömt, so dass das Schneiden des aus den Düsen 3 austretenden Kunststoffs unter der Wirkung des Kühlwassers erfolgt, wodurch die abgeschnittenen Längen des aus den Düsen 3 austretenden Kunststoffs schnell zu Granulatkörnern erstarren und aus dem Innenraum der Prozesskammer 4 ausgeschwemmt werden. Die Prozesskammer 4 ist in hier nicht näher dargestellter Weise mit der Düsenplatte 2 fest verbunden, wobei zwischen der Prozesskammer 4 und der Düsenplatte 2 eine Dichtung 23 eingesetzt ist, welche die erhitzte Düsenplatte 2 gegenüber dem mit Kühlwasser gefüllten Innenraum der Prozesskammer 4 isoliert.

Falls gewünscht, jedoch in der Figur 1 nicht dargestellt, kann die Befestigung der Messer 10 an den Messerrotor 11 dahingehend verbessert werden, dass einerseits eine gute Zugänglichkeit der die Messer haltenden Befestigungselemente besteht und andererseits diese die Strömung in Zwischenräumen nicht behindern. Dazu kann der Messerrotor anstelle der in Figur 1 gezeigten Darstellung so gestaltet sein, wie er in der Deutschen Offenlegungsschrift DE 10 2004 049 862 A1 gezeigt ist. Dabei sind Tragflächen von Seitenwänden von Radialnuten in einer Umfangsfläche des Messerrotors und von Radialquerwänden in den Radialnuten gebildet, die von den Radialquerwänden begrenzt sind, in die die Messer hakenartig mit jeweils einem Vorsprung eingesetzt sind, wobei eine Seite des Vorsprungs ein Widerlager für das Befestigungselement bildet, das eine Radialquerwand durchsetzt und auf das Widerlager drückt. Auf Grund dieser hakenartigen Befestigung der einzelnen Messer und dem Einsetzen der Befestigungselemente durch eine Radialquerwand sind diese von einer Stirnseite des Messerrotors her gesehen direkt und leicht zugänglich. Sie sind dabei von den Zwischenräumen zwischen Messern und Trägem entfernt angeordnet und können daher die in diesen Zwischenräumen verlaufende Strömung nicht behindern. Darüber hinaus bietet die hakenartige Gestaltung der Messer eine hohe Sicherheit hinsichtlich ihrer Lage in Bezug auf den Messerrotor, so dass insgesamt der erfindungsgemäß ausgestattete Messerrotor eine für den Betrieb besonders stabile, flatterfreie Gestaltung aufweist.

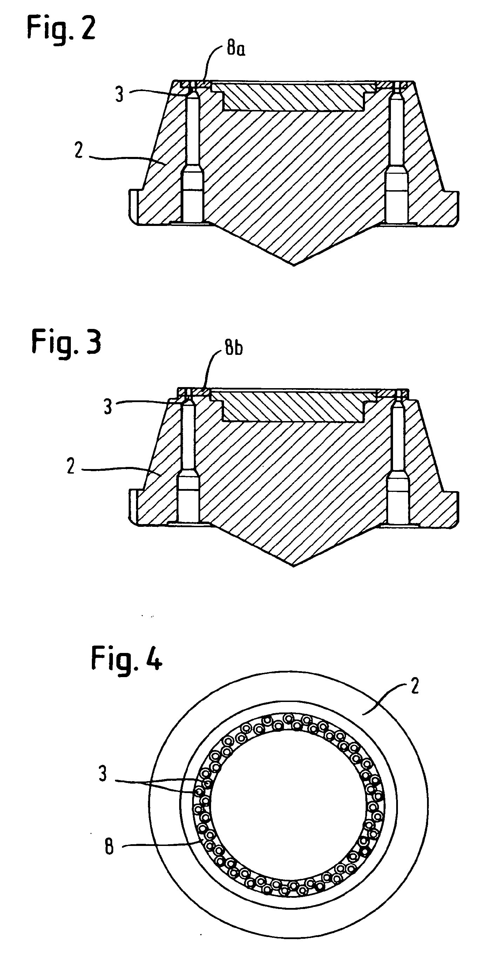

Die Figur 2 zeigt eine schematische Schnittansicht einer Düsenplatte 2 mit einer auf einer auswechselbaren Einlage 8a angeordneten Diamantbeschichtung gemäß einer bevorzugten Ausführungsform der vorliegenden Erfindung. Die Öffnungen in der Einlage 8a fluchten mit den Düsenöffnungen 3 der Düsenplatte 2.

Die Figur 3 zeigt eine weitere schematische Schnittansicht einer Düsenplatte 2 mit einer auf einer auswechselbaren Auflage 8b angeordneten Diamantbeschichtung gemäß einer weiteren bevorzugten Ausführungsform der vorliegenden Erfindung. Auch hier fluchten die Öffnungen in der Auflage 8b mit den Düsenöffnungen 3 der Düsenplatte 2.

Die Figur 4 zeigt eine schematische Draufsicht auf eine Düsenplatte 2 mit einer Diamantbeschichtung 8 gemäß einer bevorzugten Ausführungsform der vorliegenden Erfindung, wobei auch hier die Öffnungen in der Diamantbeschichtung 8 mit den Düsenöffnungen 3 der Düsenplatte 2 fluchtend angeordnet sind.

## Patentansprüche

1. Vorrichtung zur Erzeugung von Granulatkörnern aus einer Kunststoffschmelze (1), mit einer Düsenplatte (2) mit zumindest einer Düsenöffnung (3), aus welcher ein Strang der Kunststoffschmelze in eine Prozesskammer (4) austritt, und einem Schneidwerkzeug (5) mit zumindest einer Schneidleiste (6), welches mit einer Vorschubvorrichtung (7) gegen die Düsenplatte (2) fahrbar ist, wobei der aus der Düsenöffnung (3) der Düsenplatte (2) austretende Kunststoffstrang durch die relativ zur Düsenöffnung (3) bewegte Schneidleiste (6) in Granulatkörner zerteilbar ist, wobei die Düsenplatte (2) zumindest auf der zum Schneidwerkzeug (5) hin zeigenden Oberfläche eine Diamantbeschichtung (8) aufweist, **dadurch gekennzeichnet, dass** die Härte der Diamantbeschichtung (8) größer ist als die Härte der Schneidleiste (6), und wobei die durchschnittliche Rauhigkeit der Diamantbeschichtung (8) um mindestens den Faktor zwei größer ist als die durchschnittliche Rauhigkeit der Schneidleiste (6).

2. Vorrichtung nach Anspruch 1, **dadurch gekennzeichnet, dass** die durchschnittliche Rauhigkeit der Diamantbeschichtung (8) um mindestens den Faktor fünf, bevorzugt den Faktor zehn, größer ist als die durchschnittliche Rauhigkeit der Schneidleiste (6).

3. Vorrichtung nach Anspruch 1 oder 2, **dadurch gekennzeichnet, dass** die durchschnittliche Rauhigkeit der Diamantbeschichtung (8) größer gleich 0,50 µm ist.

4. Vorrichtung nach einem der Ansprüche 1 bis 3, **dadurch gekennzeichnet, dass** die Diamantbeschichtung (8) eine Dicke im Bereich von 50 µm bis 100 µm aufweist.

5. Vorrichtung nach einem der Ansprüche 1 bis 4, **dadurch gekennzeichnet, dass** die Diamantbeschichtung (8) auf einer auswechselbaren Einlage (8a) oder Auflage (8b) in oder auf der Düsenplatte (2) angeordnet ist.

6. Vorrichtung nach einem der Ansprüche 1 bis 5, **dadurch gekennzeichnet, dass** die Schneidleiste (6) aus einer Hartmetalllegierung besteht.

## Claims

1. A device for the production of granulate grains from a plastic melt (1), comprising a nozzle plate (2) having at least one nozzle aperture (3) from which a strand of said plastic melt is discharged into a processing chamber (4), and a cutting tool (5) having at least one cutting blade (6) that can be moved against said nozzle plate (2) by means of a feed device (7), wherein said plastic strand discharged from said nozzle aperture (3) of said nozzle plate (2) can be comminuted into granulate grains by the cutting blade (6) moving relative to said nozzle aperture (3), with said nozzle plate (2) exhibiting a diamond coating (8) at least on the surface thereof facing said cutting tool (5), **characterized in that** the hardness of said diamond coating (8) is higher than the hardness of said cutting blade (6) and wherein the average roughness of said diamond coating (8) is higher than the average roughness of said cutting blade (6) by at least a factor of two.

2. The device of claim 1 **characterized in that** the average roughness of said diamond coating (8) is higher than the average roughness of said cutting blade (6) by at least a factor of five, preferably by a factor of ten.

3. The device of claims 1 or 2 **characterized in that** the average roughness of said diamond coating (8) is higher than or equal to 0.50 µm.

4. The device of one of claims 1 to 3 **characterized in that** said diamond coating (8) is of a thickness of between 50 µm and 100 µm.

5. The device of one of claims 1 to 4 **characterized in that** said diamond coating (8) is provided on an exchangeable insert (8a) or support (8b) in or on said nozzle plate (2).

6. The device of one of claims 1 to 5 **characterized in that** said cutting blade (6) is made of a hard metal alloy.

## Revendications

1. Dispositif pour la fabrication de granulés à partir d'un plastique en fusion (1) avec une plaque de buse (2) avec au moins une ouverture de buse (3), de laquelle un fil du plastique en fusion sort dans une chambre de processus (4) et avec un outil de coupe (5) avec au moins un liteau de coupe (6) qui est mobile avec un dispositif de déplacement (7) contre la plaque de buse (2), sachant que le fil en plastique sortant de l'ouverture de buse (3) de la plaque de buse (2) peut être divisé en granulats par le listeau de coupe (6) déplacé relativement à l'ouverture de buse (3), sachant que la plaque de buse (2) présente sur la superficie au moins un revêtement diamant (8) face à l'outil de coupe (5), **caractérisé en ce que** la dureté du revêtement diamant (8) est supérieure à la dureté du listeau de coupe (6) et sachant que la rugosité moyenne du revêtement diamant (8) est supérieure à que la rugosité moyenne du listeau de coupe (6) par au moins un facteur deux.

2. Dispositif selon revendication 1, **caractérisé en ce que** la rugosité moyenne du revêtement diamant (8) est supérieure à la rugosité moyenne du listeau de coupe (6) par un moins un facteur cinq, de préférence facteur dix.

3. Dispositif selon revendication 1 ou 2, **caractérisé en ce que** la rugosité moyenne du revêtement diamant (8) est supérieure ou égale à 0,50 µm.

4. Dispositif selon l'une des revendications 1 à 3, **caractérisé en ce que** le revêtement diamant (8) présente une épaisseur comprise entre 50 µm et 100 µm.

5. Dispositif selon l'une des revendications 1 à 4, **caractérisé en ce que** le revêtement diamant (8) est placé sur une intercalation (8a) ou une surface d'appui (8b) dans ou sur la plaque de

6. Dispositif selon l'une des revendications 1 à 5, **caractérisé en ce que** le listeau de coupe (6) est composé d'un alliage de métal dur.
